# EUROPEAN PATENT APPLICATION

(11) **EP 3 480 890 A1**
(43) Date of publication of application: **08.05.2019**
(21) Application number: 17306528.5
(22) Date of filing: 06.11.2017
(51) Int. Cl.: H01Q 3/08, H04B 7/02

(54) **DYNAMIC WIRELESS SIGNAL STRENGTH IMPROVEMENT DEVICE**

(71) Applicant: THOMSON LICENSING, 92130 Issy les Moulineaux (FR)
(72) Inventor: PARTHASARATHY, Shanmugasarathy, 600020 Chennai (IN); MS, Zameerun, 620008 Tiruchirappalli (IN)
(74) Representative: Vidon Brevets & Stratégie

(57) **Abstract**

A method and apparatus are described including determining a direction an antenna should be pointed based on at least one of a location of at least one electronic communication device in an environment and at least one received signal strength indication, determining based on the direction determination, a first angle to rotate the antenna in a first plane and a second angle to rotate the antenna in a second plane perpendicular to the first plane, activating a first motor, based on the angle determination, to rotate the antenna in a first direction by the first angle and activating a second motor, based on the angle determination, to rotate the antenna in a second direction by the second angle. Also described is a computer-readable medium including instructions, which when executed by a computer, cause the computer to carry out the proposed method.

## Description

### FIELD

The proposed method and apparatus is directed to an antenna having improved wireless signal strength that can be attached to any electronic communication device.

### BACKGROUND

In multicast and broadcast applications, data are transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Wireless communication has been an unavoidable and influential part of the modern world as wireless communications increase in importance. The most commonly used antenna in wireless communications is an omni-directional antenna. An omni-directional antenna is the antenna best used to radiate wireless signals across an area widely and equally. While it is widely believed that the signal pattern of an omni-directional antenna is spherical (globe-like), technically, the signal radiated by an omni-directional antenna is more doughnut shaped. Certain parts around an antenna have less signal gain than other parts of an antenna. Gain is not or may not be equally uniform around the antenna. While the proposed method and apparatus may be described herein in terms of an omni-directional antenna, the proposed method and apparatus are no so limited and any antenna may be used.

Wireless signals are prone to interference from nearby devices using other wireless frequency standards. Wireless signals are also subject to interference from other nearby wireless communication devices, which use the same frequency channels.

Furthermore, the wireless signal pattern propagated around the antenna is highly affected by the objects around the wireless signal (walls, furniture, people roaming nearby, things.... etc). There needs to be more focus on improving the wireless signal strength. A typical home is not a single large room with a wireless communication device located in the middle of the room but rather a typical home may have different rooms located at different directions and also possibly will have rooms on multiple floors. While the proposed method and apparatus is described in terms of a home or residence, it is not so limited but may be a small business or other environment such as a small school setting, etc.

Everyone has experienced wireless signal problems at some locations in their environment. This is due to the distance between the antenna and wireless communication target device and the sources of interference. Wireless signals will be around the frequencies 2.5GHz, 5GHz, 60GHz based on the WiFi specification. Other frequencies can be used for wireless communications.

The higher the frequency, the higher the speed and the greater the bandwidth. Higher speed and higher bandwidth come with a price (cost) and that is the noise and interference increases.

### SUMMARY

The solution proposed herein increases the wireless signal strength by making the antenna dynamically auto-movable. Dynamic mobility in turn changes the signal pattern around the antenna, which will help to increase the wireless signal strength in certain directions as needed for the individual situation. While the proposed method and apparatus may be described herein in terms of WiFi communications, the proposed method and apparatus are not so limited and may be any wireless communications.

Since elements of embodiments can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

In a first aspect a method is described including determining a direction an antenna should be pointed based on at least one of a location of at least one electronic communication device in an environment and at least one received signal strength indication, determining based on the direction determination, a first angle to rotate the antenna in a first plane and a second angle to rotate the antenna in a second plane perpendicular to the first plane, activating a first motor, based on the angle determination, to rotate the antenna in a first direction by the first angle and activating a second motor, based on the angle determination, to rotate the antenna in a second direction by the second angle.

In an embodiment the method further includes accessing priority information for identified electronic communication devices or locations in the environment and determining the direction based on the priority of the identified electronic communication devices or corresponding locations.

In an embodiment, the method further includes scanning to locate and identify electronic communication devices in the environment.

In an embodiment the scanning is performed on a time permitted basis.

In another aspect, an apparatus is described including a first base having mounted thereon a first rotatable element, a first motor, to control the first rotatable element, the first rotatable element being operable to rotate in a first plane, a support mounted on the first rotatable element,
a second base mounted on the support, a second motor to control an antenna mounted on the support, the antenna being operable to rotate in a second plane perpendicular to the first plane, a processor configured to determine a direction the antenna should be pointed based on at least one of a location of at least one electronic communication device in an environment and at least one received signal strength indication, determine based on the direction determination, a first angle to rotate the antenna in the first plane and a second angle to rotate the antenna in the second plane perpendicular to the first plane, activate the first motor based on the angle determination, to rotate the antenna in a first direction by the first angle and activate the second motor based on the angle determination, to rotate the antenna in a second direction by the second angle.

In an embodiment, the first base includes or is connected to one of a router, a gateway, a set top box, a bridge, a brouter, a modem, a television and a digital television.

In an embodiment, the second base has a slot therethrough to permit rotation of the antenna through the first plane.

In an embodiment, the first motor and the second motor are operable to enable the antenna to have a 360 degree range of motion.

In an embodiment, at least one of the first motor and the second motor are stepping motors.

In an embodiment at least one of the first motor and the second motor are servo motors.

In an embodiment, the apparatus further includes a detector to detect one or more electronic communication devices or communication locations in an environment and wherein the processor is configured to control the first motor and the second motor based on priority information ranking the detected electronic communication devices.

In an embodiment, if multiple locations have been assigned priorities, then a location with a highest priority is determined and the first motor and the second motor are directed to a position for the one of the multiple locations having the highest priority.

In an embodiment, the apparatus further includes a wireless communications protocol chip, wherein the wireless communications protocol chip is in bi-directional communication with a processor and a memory in the apparatus, the wireless communications protocol chip receiving and processing a received signal strength indication, the processing may include coordination with the processor and the memory.

In another aspect, a computer-readable medium is described including instructions, which when executed by a computer, cause the computer to carry out the proposed method.

In another aspect, an electronic device is described including an apparatus according to proposed apparatus.

### BRIEF DESCRIPTION OF THE DRAWINGS

The proposed method and apparatus is best understood from the following detailed description when read in conjunction with the accompanying drawings. The drawings include the following figures briefly described below:
Fig. 1 depicts the antenna positions in two dimensions.
Fig. 2 is an exemplary radiation pattern for an omni-directional antenna.
Fig. 3 depicts cannon, which is mounted to a fixed base and can rotate from 0 degrees to 180 degrees.
Fig. 4 depicts a wave beam direction/shape relationship with antenna polarization for an omni-directional antenna.
Fig. 5 is a schematic diagram of an exemplary proposed apparatus in accordance with principles of the present invention.
Fig. 6 depicts the position P of the antenna reachable by movement horizontally and vertically through two angles, ϕ and θ.
Fig. 7 depicts a sphere or globe showing positioning of an antenna.
Fig. 8 is a flowchart of an exemplary embodiment of the operation of an exemplary dynamic wireless signal strength improvement device in accordance with the principles described herein.
Fig. 9 is a block diagram of an exemplary embodiment of the proposed dynamic wireless signal strength improvement device for practicing the proposed method.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

Recently, electronic communication devices capable of wireless communications have incorporated additional antennas, for example some wireless routers have incorporated up to eight antennas unlike older single antenna wireless routers. The proposed method and apparatus makes an antenna movable by two electric mini motors affording the antenna two degrees of motion. A first motor rotates (moves) the antenna in a horizontal circle like a disc. A second motor rotates (moves) the antenna in vertical direction (end to end). By combining the two planes of motion, the antenna can be positioned at any location in a sphere. The proposed method and apparatus for moving the antenna periodically collects data about the signal strength between electronic communication devices and the antenna for different locations and determines the best possible antenna position for the various available electronic communication devices.

The proposed method and apparatus sets out to determine the best possible antenna position to increase the signal for a specific location based on a location of a target electronic communication device with which the electronic communication device associated with the antenna is attempting wireless communications. The target electronic communication device may be fixed (stationary) or mobile, such as a smart phone, iPad, iPod, tablet, laptop computer, notebook computer or other electronic communication device capable of wireless communications. To address the problem (issue) of sharing an antenna among multiple target electronic communication devices, priority can be assigned to specific devices. Not all the antennas need to be configured for dynamic positioning. Certain antennae can be in standard position to serve general wireless communications. There may be one or more antenna(s) not configured for dynamic positioning. There may also be more than one antenna configured for the dynamic positioning proposed herein. If there are multiple dynamic wireless signal strength improvement devices in an environment they may each focus on different priorities. Communications between dynamic wireless signal strength improvement devices include short range communications, such as but not limited to Bluetooth, Zigbee, Zwave, RF4CE, Lora, Thread, NarrowBand-Internet of Things (NB-IOT), 6LoWPAN or any wireless communications means. ZigBee is an IEEE 802.15.4-based specification for a suite of high-level communication protocols used to create personal area networks with small, low-power digital radios. 6LoWPAN is an acronym for *IPv6 over Low power Wireless Personal Area Networks.* RF4CE is a ZigBee application profile. Thread is an Internet of Things (IoT) home automation protocol. NarrowBand IoT is a Low Power Wide Area Network (LPWAN) radio technology standard that has been developed to enable a wide range of devices and services to be connected using cellular telecommunications bands.

Movement or re-positioning of the connected targeted wireless electronic communication devices is one of the inputs for the proposed method and apparatus. The input can either be given manually or by a built-in scanning and sensing system or from an external system such as from the cloud, the Internet or another wireless communication device. The proposed method and apparatus could also have a scanning system, which iterates and positions the antenna in different positions to locate target electronic wireless communication devices. There can be infinite points in the sphere for the antenna's positions. It would, however, be preferable to have fixed positions in the sphere, such as by even degrees, for example 0 to 360 degrees.

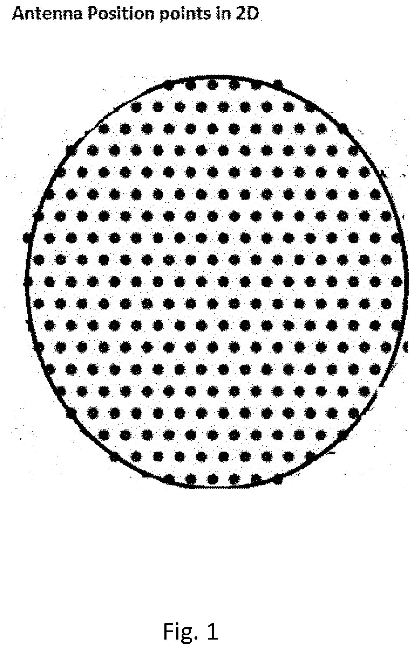

Fig. 1 depicts the antenna positions in two dimensions. While it is difficult to show a sphere, which is three dimensional in on a flat surface, Fig. 1 gives the reader an idea of the possible antenna positions.

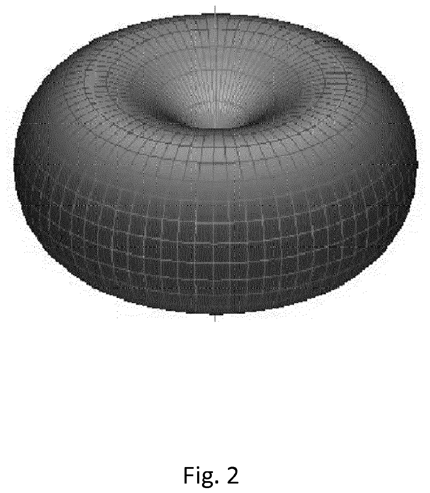

Fig. 2 is an exemplary radiation pattern for an omni-directional antenna. An omni-directional antenna is used to explain the proposed method and apparatus but the proposed method and apparatus is not so limited and may be used with any antenna.

The proposed apparatus can be mounted on any electronic communication device. It is preferable to mount the proposed apparatus on an electronic communication device to be used for communicating with other electronic communication devices, such as, but not limited to, a television (TV), a set top box, a gateway, a router, a bridge, a brouter and the like. The proposed apparatus has a first rotatable element that is in a horizontal plane, parallel to the surface to which the apparatus is to be mounted. The rotatable element may be a gear wheel but is not so limited. A first motor controls the first rotatable element and rotates the first rotatable element circularly in the horizontal plane. A pillar or support (vertical) is mounted to the first rotatable element. A second rotatable element is mounted horizontally on the pillar. A second motor controls an antenna mounted on the second base. The antenna is operable to rotate circularly in a vertical plane. The second base may have a slot therethrough to permit rotation of the antenna through the horizontal plane of the second base. That is the motor controls the antenna so the antenna can travel from 0 degrees to 360 degrees. Once the antenna reaches 360 degrees, the antenna can be rotated back through the horizontal plane to 0 degrees. Similarly, the first rotatable element rotates from 0 degrees to 360 degrees. Once the first rotatable element reaches 360 degrees, the first rotatable element can be rotated back to 0 degrees. Using the first and second motors the antenna can be rotated to an optimum position for communication between the electronic communication device to which the proposed apparatus is mounted and another electronic communication device. The horizontal and vertical planes are a first plane and second plane perpendicular to each other, where horizontal and vertical are interchangeable.

The proposed apparatus can be thought of as a cannon or mortar such as used in military operations. The antenna could be, if mounted flush with the second base, rotatable between 0 degrees and 180 degrees. If the second base has a slot therethrough then the antenna is rotatable from 0 degrees to 360 degrees through the horizontal plane of the second base.

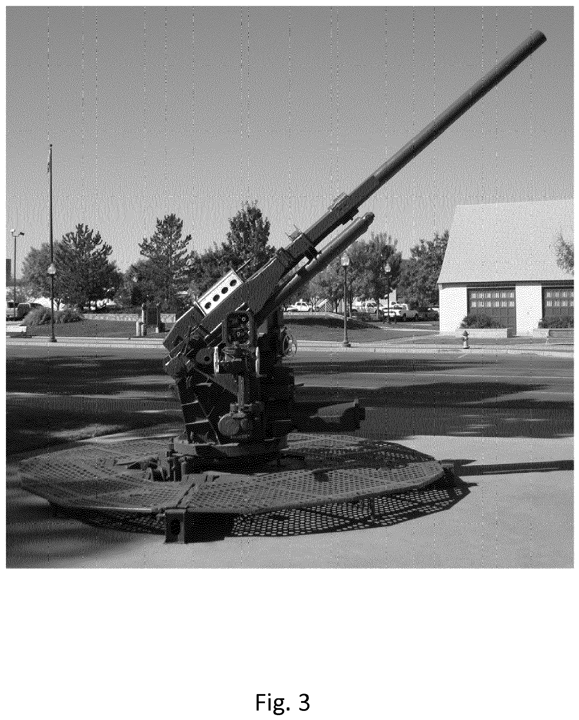

Fig. 3 depicts cannon, which is mounted to a fixed base and can rotate from 0 degrees to 180 degrees.

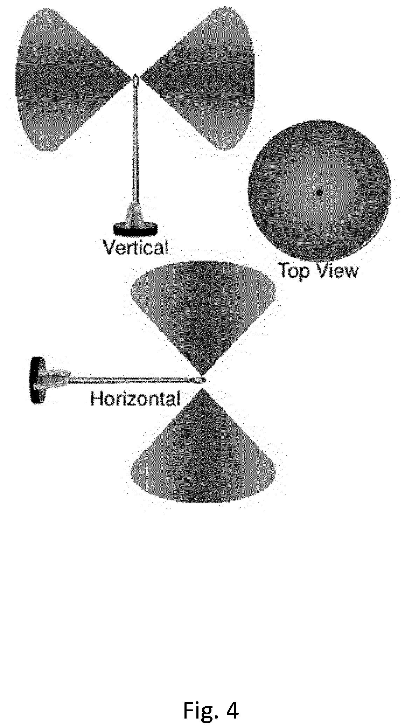

Fig. 4 depicts a wave beam direction/shape relationship with antenna polarization for an omni-directional antenna. The polarization change of an omni-directional antenna does change the doughnut shaped beam direction around an environment including upstairs and downstairs because the beam direction is always associated with the omni-directional antenna orientation/polarization. The proposed apparatus rotates the antenna in two planes thus, achieving rotation in a sphere.

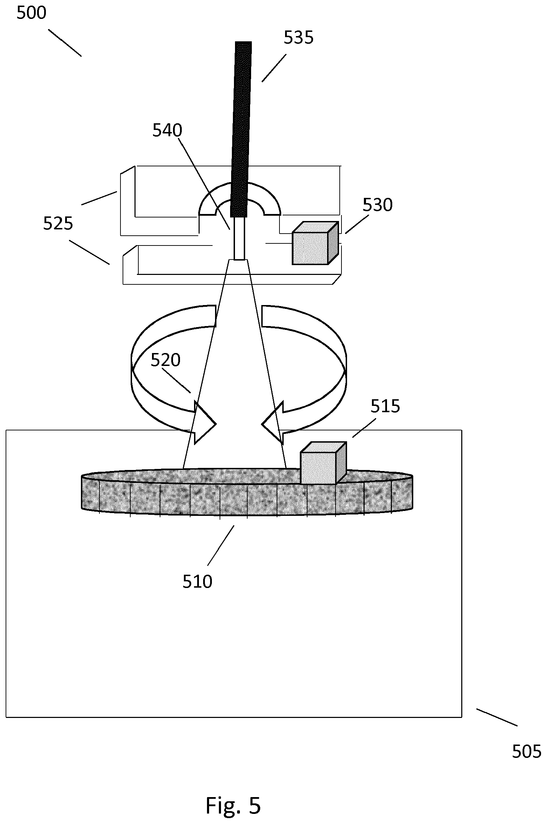

Fig. 5 is a schematic diagram of an exemplary proposed apparatus 500 in accordance with principles of the present invention. The marbled gray disc shape is, for example, a first rotatable element 510. The first motor 515 may be mounted thereon or at any other convenient location on the apparatus or on the electronic communication device 505 to which the proposed apparatus is mounted. Pillar 520 is mounted (attached) to the first rotatable element 510. The arrows indicate that the pillar 520 attached to the first rotatable element 510 rotates back and forth from 0 degrees to 360 degrees in a horizontal plane. A base 525 is attached horizontally to the top of the pillar 520. Antenna 535 is attached to a second rotatable element 540, which is attached to pillar 520. A second motor 530 may be attached to the base 525 or to any other convenient location to operate to rotate antenna 535 circularly through a vertical plane. If the base 525 has a slot therethrough (as shown) then the antenna 535 can rotate back and forth vertically from 0 degrees to 360 degrees. If the base is solid (has no through slot) then the antenna can rotate back and forth vertically from 0 degrees to 180 degrees. Since the base 525 is attached to the pillar 520 and the pillar 520 is attached to the rotatable element 510 and the antenna 535 is attached to the second rotatable element the entire arrangement is circularly rotatable in the horizontal plane.

The proposed apparatus, thus, rotates the antenna 535 in two planes thus, achieving rotation in a sphere. The antenna 535 can, thus, be pointed anywhere in a sphere (globe). The first and second motors can be stepping motors or servo motors. Both horizontal and vertical rotations are from 0 degrees back and forth to 180 degrees (antenna) or to 360 degrees (antenna, first rotatable element, pillar, etc.).

The apparatus is to be constructed of any material that provides the least amount of electro-magnetic interference. The antenna will be rotated and positioned at a point which achieves the best signal for communication between the electronic communication device to which the proposed apparatus is mounted and a target electronic communication device. When not in active use the antenna may be used to periodically scan to find any new possible target electronic communication device or mobile target electronic communication devices, such as smart phones, tablets etc. Specific target electronic communication devices can be prioritized. Hence, the special target electronic communication device will be given priority when there is contention for antenna use. There may be an antenna or antennas present in the environment that are not attached to the proposed apparatus that are dedicated to general purpose use. Such immovable antennas can serve one or more general purpose electronic communication devices.

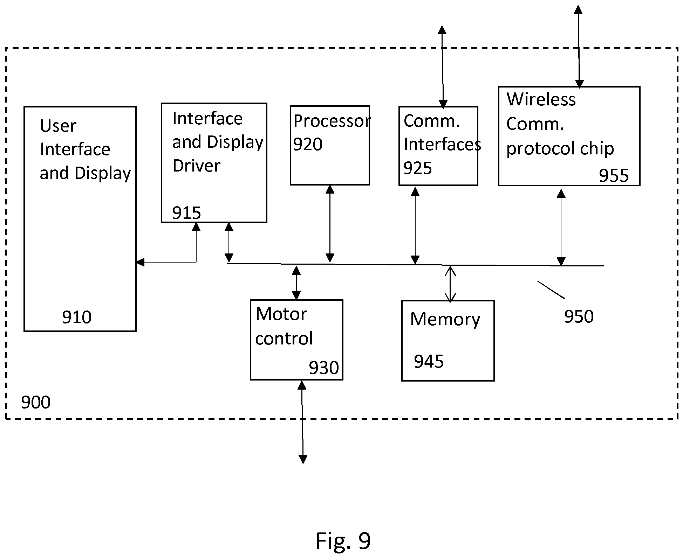

The proposed apparatus may include memory (storage) and store location points in the environment which are better or the best (optimum) position for the antenna for communication between one or more target electronic communication devices. The proposed apparatus may also include one or more processors to permit continuous learning and modification of control of the proposed apparatus. The proposed apparatus may also include a user interface. The user interface may be used for receiving (accepting) user information to register the proposed apparatus with the manufacturer and/or the user interface may also be used for receiving (accepting) priority of various electronic communication devices in the environment. Priorities may also be set through the cloud, the Internet or other electronic communication devices. This may be through a communications interface such as described below with respect to Fig. 9. If there is no priority given to an electronic communication device then that device is at the bottom of any list of priority of electronic communication devices in the environment and is able to receive best effort service only. Such a device may belong to a child or guest in a home environment or a new or part-time employee or an infrequent customer in a small business environment. If there is no user interface then registration and setting of priorities may be received (accepted) through the communication interface from another electronic communication device such as a smart phone, iPhone, iPad, iPod, tablet, computer, laptop computer, notebook computer etc. The user interface may include some sort of keypad and/or display or may be a set of buttons and indicator lights.

If one or more electronic communication devices are in the environment and more than one device indicates that it wishes to communicate with the electronic communication device on which the proposed apparatus is mounted, the proposed apparatus determines if there is a priority and selects the electronic communication device with the higher (highest) priority for determining where to point the antenna. If there is no priority among the various electronic communication devices then the electronic communication device selected to engage in communication with the electronic communication device upon which the proposed apparatus is mounted (to which signal the antenna is pointed) is based on the higher (highest) RSSI. The RSSI measurements may be made by the wireless communication protocol chip, which also handle analog-to-digital conversion, demodulation, digital parsing etc. of the RSSI measurements and of the received signals. The RSSI measurements may also be made by separate chip or a separate chip along with software or the wireless communication protocol chip along with software. RSSI measurements and how to make RSSI measurements and how to process RSSI measurements is known.

It may be possible to use the same motor to move multiple horizontal rotatable elements of different antennas. Since the motors are not moved continuously, they are moved only when there is need to re-position the antenna, this can be accomplished by attaching switches (mechanical or electro-mechanical), gears shafts etc.

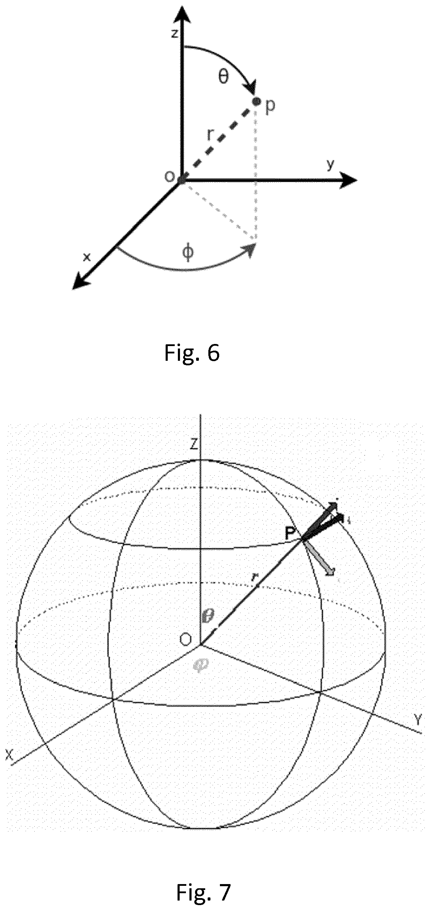

Fig. 6 depicts the position P of the antenna reachable by movement horizontally and vertically through two angles, ϕ and θ. To point the antenna (top edge point) to a position P (as shown in the figure) or to any other position, two movements will be needed from first (horizontal) and second (vertical) motors. Position P can be denoted by angles. Every position on the sphere (globe) can be denoted (reached) by two angles. The number of positions that can be reached on the sphere are so huge (infinite if angles are denoted in fractions or decimal points), for better handling of the antenna positions vs location in the environment, angles can be fixed to even degrees on the sphere (globe).

Fig. 7 depicts a sphere or globe showing positioning of an antenna. Assume the antenna is in default vertical position (pointing straight up to the ceiling in an environment) exactly on the Z axis with X=0 and Y=0. To move the antenna to a different position (e.g., 45°, 45°), second (vertical) motor (through the second (vertical) rotatable element) moves the antenna by the required angle. This vertical movement (rotation) occurs in the Y plane (top edge point moves on Y axis based on the angle moved, still with X=0). After this the first (horizontal) motor moves the first rotatable element horizontally (which moves the supporting pillar, top base and second rotatable element and antenna) by the required horizontal angle to reach the desired position. While described above as first positioning (rotating) the antenna in the vertical plane and then positioning (rotating) the antenna in the horizontal plane, the planes of movement may first be moved (rotated) horizontally and then moved (rotated) vertically. At this position, antenna top edge will be in non-zero X, Y, Z. Otherwise, the two-angle representation of any position should be fine. That is, an alternative coordinate system such as polar coordinates may also be used. In the X, Y, Z coordinate system each angle can range from 0 degrees to 360 degrees (full circle of a rotatable element).

The above example explains the movement from a default antenna position. If the antenna is already in a different position then a processor in the proposed apparatus determines the adjusted angles (relative angles) to reach the destination from the present (non-default) position.

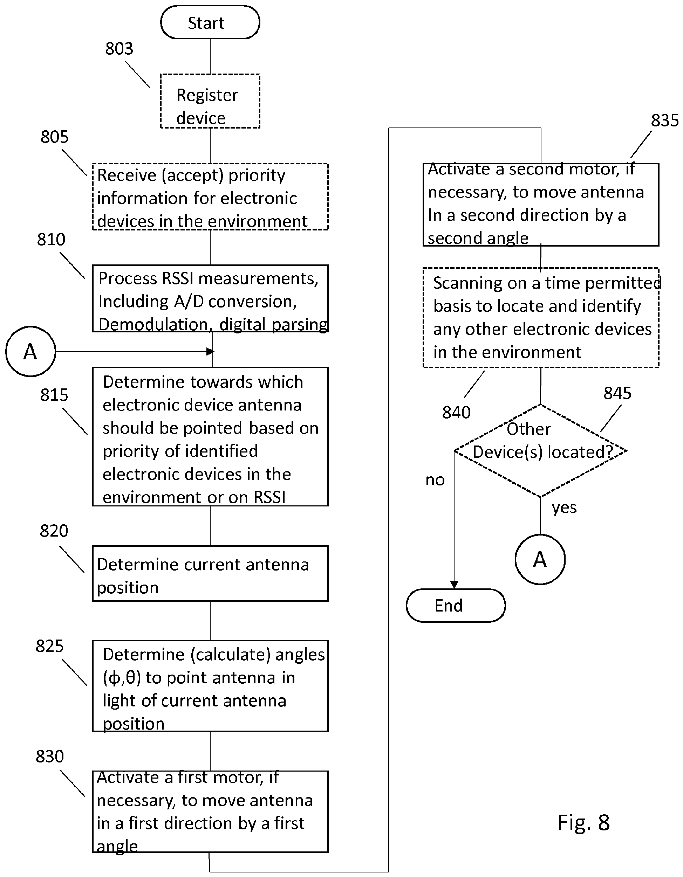

Fig. 8 is a flowchart of an exemplary embodiment of the operation of an exemplary dynamic wireless signal strength improvement device in accordance with the principles described herein. At 803 the dynamic wireless signal strength improvement device registers itself with the manufacturer. At 805 the dynamic wireless signal strength improvement device receives (accepts) priority information for electronic communication devices in the environment. Both 803 and 805 are outlined in dashes as opposed to solid lines to indicate that this functionality is optional. At 810 the dynamic wireless signal strength improvement device processes RSSI measurements. The RSSI measurements may be made by the wireless communication protocol chip, which also handles analog-to-digital conversion, demodulation, digital parsing etc. of the RSSI measurement and of the received signals. The RSSI measurements may also be made by separate chip or a separate chip along with software or the wireless communication protocol chip along with software. RSSI measurements and how to make RSSI measurements and how to process RSSI measurements is known.

At 815 the dynamic wireless signal strength improvement device determines towards which electronic communication device the antenna should be pointed. This determination is made based on the priority(ies) of the electronic communication device(s) in the environment or, if no priority(ies) have been assigned then based on the RSSI. Priority may be assigned based on the location. For example, an office may be higher priority than the deck or terrace. At 820 the dynamic wireless signal strength improvement device determines the current position of the antenna. At 825 the dynamic wireless signal strength improvement device determines (calculates) the angles (ϕ, θ) to point the antenna in light of the current antenna position.

At 830 the processor sends signals to control the first motor to move (rotate) the antenna vertically by a first angle, for example, θ, if necessary. The antenna may already be in the best vertical position for communications. At 835 the processor sends signals to control the second motor to move (rotate) the antenna horizontally by a second angle, for example, ϕ, if necessary. The antenna may already be in the best horizontal position for communications. At 840, time permitting, the dynamic wireless signal strength improvement device scans the environment to locate and identify if there are any other electronic communication device(s) in the environment. That is, the scanning is performed if there is sufficient processing time to do so. The processor may be busy performing other tasks and the scanning is not a high priority task so the scanning will be performed if there is time. Scanning 840 is also outlined in dashes to indicate that this functionality is optional. At 845 a test is performed to determine if any other electronic communication device(s) is/are located and identified. Testing 845 is also outlined in dashes to indicate that this functionality is optional. If any other electronic communication device(s) is/are located and identified then processing proceeds to 815. If no other electronic communication device(s) is/are located and identified then processing ends.

It should be noted that while described above as first pointing the antenna in the vertical direction and then pointing the antenna in the horizontal direction that the operations may be reversed and the antenna may be pointed first in the horizontal direction and then in the vertical direction. It should be noted as well that based on the current position of the antenna, it may not need to be moved at all in one or both directions. That is, the order of steps 830 and 835 may be reversed.

It should be noted that additional optional processing may occur. Specifically, the processor in combination with the memory may provide the ability to permit continuous learning and modification of control of the proposed apparatus. It may also be possible to determine if the signal strengths versus positions are learned.

Fig. 9 is a block diagram of an exemplary embodiment of the proposed dynamic wireless signal strength improvement device 900 for practicing the proposed method. The block diagram configuration includes a bus-oriented configuration 950 interconnecting a processor (processing unit) 920, and a memory 945. The configuration of Fig. 9 also includes a communication interface 925. The communication interface 925 may be wired or wireless and may in fact, include two interfaces- one for wired line communication and one for wireless communication. There is a wireless communication protocol chip 955 for making RSSI measurements and processing those measurements. Processing RSSI measurements includes analog-to-digital conversion, demodulation and digital parsing. The wireless communication protocol chip 955 may perform all of the processing or the wireless communication protocol chip 955 may work with processor 920 and/or memory 945 to perform the processing. The wireless communication protocol chip 955 is in communication with the remaining components (modules) in the proposed apparatus through the bus 950. There is also a motor control module 930 for activating the first and second motors as necessary to point the antenna to the best position for communications. The motor control module 930 is in communication with the remaining components in the dynamic wireless signal strength improvement device through bus 950. The processor determines the antenna position and amount of activation for each of the two motors. The motors themselves may be stepping motors or servo motors. User interface and display 910 is driven by interface circuit 915. The user interface and display 910 and interface circuit 915 are not limited to "displaying" a message. As used herein displaying may actually be displaying the message on a display screen or may also include audio or may be a set of buttons and indicator lights. In the case of audio, audio prompts may be available to aid the user to generate the message or audio may be available to hear any responses. The audio may be available the user interface of the dynamic wireless signal strength improvement device or through a device such as a cell phone connected through Bluetooth or any other short range communication means to the dynamic wireless signal strength improvement device. The Bluetooth may be through the communications interface 925 or another communications interface (not shown).

Processor 920 provides computation functions for the dynamic wireless signal strength improvement device, such as depicted in Fig. 8. The processor 920 can be any form of CPU or controller that utilizes communications between elements of the network access device to control communication and computation processes. Those of skill in the art recognize that bus 950 provides a communications path between the various elements of embodiment 900 and that other point-to-point interconnection options (e.g. non-bus architecture) are also feasible.

Any or all of the functionality included in the network access device may be embodied as application specific integrated circuits (ASICs), field programmable gate arrays (FPGAs), reduced instruction set computers (RISCs) or any other equivalent separate type of coprocessor integrated into processor 920.

Memory 945 can act as a repository for memory related to any of the methods that incorporate the functionality of the dynamic wireless signal strength improvement device. Memory 945 can provide the repository for storage of information such as program memory, downloads, uploads, or scratchpad calculations. Those of skill in the art will recognize that memory 945 may be incorporated all or in part of processor 920. Communication interface 925 has both receiver and transmitter elements for wired line or wireless communications. Program instructions for operation of the processor of the dynamic wireless signal strength improvement device may be in memory 945 or may be in processor.

Processor 920 and memory 945 may also be configured to provide learning as described above but not shown on Fig. 8.

The processing in accordance with the method shown in Fig. 8 is predominantly performed in the sensor module, the communications module, motor control module 930 and the processor 920. The processor performs the steps/acts of the method but the reception and transmission between the dynamic wireless signal strength improvement device (and consequently on the electronic communication device on which the dynamic wireless signal strength improvement device is mounted) and another electronic communication device.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase **"at least one** of A, **B and** C," the phrase means "only A, or only B, or only C, or any combination of A, B and C."

## Claims

1. A method, comprising:
determining (815) a direction an antenna should be pointed based on at least one of a location of at least one electronic communication device in an environment and at least one received signal strength indication;
determining (825) based on said direction determination, a first angle to rotate said antenna in a first plane and a second angle to rotate said antenna in a second plane perpendicular to said first plane;
activating (830) a first motor, based on said angle determination, to rotate said antenna in a first direction by said first angle; and
activating (835) a second motor, based on said angle determination, to rotate said antenna in a second direction by said second angle.

2. The method according to claim 1, further comprising accessing (805) priority information for identified electronic communication devices or locations in the environment and determining the direction based on the priority of said identified electronic communication devices or corresponding locations.

3. The method according to claim 1 or 2, further comprising scanning (840) to locate and identify electronic communication devices in the environment.

4. The method according to claim 3, wherein said scanning is performed on a time permitted basis.

5. An apparatus, comprising:
a first base (505) having mounted thereon a first rotatable element (510);
a first motor (515), to control said first rotatable element, said first rotatable element being operable to rotate in a first plane;
a support (520) mounted on said first rotatable element;
a second base (525) mounted on said support;
a second motor (530) to control an antenna mounted on said support, said antenna being operable to rotate in a second plane perpendicular to said first plane;
a processor configured to:
determine a direction said antenna should be pointed based on at least one of a location of at least one electronic communication device in an environment and at least one received signal strength indication;
determine based on said direction determination, a first angle to rotate said antenna in said first plane and a second angle to rotate said antenna in said second plane perpendicular to said first plane;
activate said first motor based on said angle determination, to rotate said antenna in a first direction by said first angle; and
activate said second motor based on said angle determination, to rotate said antenna in a second direction by said second angle.

6. The apparatus according to claim 5, wherein said first base comprises or is connected to one of a router, a gateway, a set top box, a bridge, a brouter, a modem, a television and a digital television.

7. The apparatus according to claim 5 or 6, wherein said second base has a slot therethrough to permit rotation of said antenna through the first plane.

8. The apparatus according to any one of claim 5 to 7, wherein said first motor and said second motor are operable to enable the antenna to have a 360 degree range of motion.

9. The apparatus, according to any one of claims 5 to 8, wherein at least one of said first motor and said second motor are stepping motors.

10. The apparatus, according to any one of claims 5 to 8, wherein at least one of said first motor and said second motor are servo motors.

11. The apparatus according to any one of claim 5 to 10, further comprising a detector to detect one or more electronic communication devices or communication locations in an environment and wherein said processor is configured to control said first motor and said second motor based on priority information ranking said detected electronic communication devices.

12. The apparatus according to claim 11, wherein if multiple locations have been assigned priorities, then a location with a highest priority is determined and said first motor and said second motor are directed to a position for said one of said multiple locations having the highest priority.

13. The apparatus according to claim 5 to 10, further comprising a wireless communications protocol chip, wherein said wireless communications protocol chip is in bi-directional communication with a processor and a memory in said apparatus, said wireless communications protocol chip receiving and processing a received signal strength indication, said processing may include coordination with said processor and said memory.

14. A computer-readable medium comprising instructions, which when executed by a computer, cause the computer to carry out the method of any of claims 1 to 4.

15. An electronic device comprising an apparatus according to any one of claims 5 to 13.
